# FASCICULE DE BREVET EUROPEEN

(11) **EP 1 653 593 B1**
(45) Date de publication et mention de la délivrance du brevet: **24.01.2018**
(21) Numéro de dépôt: 05022986.3
(22) Date de dépôt: 21.10.2005
(51) Int. Cl.: H02K 16/00, H02K 7/102, B64C 11/28, B64C 27/50

(54) **Moteur électromécanique à double sortie**
Doppelausgangs-Elektromotor
Dual output electromechanical motor

(30) Priorité: 27.10.2004 FR 0411464
(43) Date de publication de la demande: 03.05.2006
(73) Titulaire: Airbus Helicopters, 13725 Marignane Cedex (FR); Artus, 49241 Avrille (FR)
(72) Inventeur: Louis, Charles, 13090 Aix en Provence (FR); Quesne, Patrick, 49000 Ecouflant (FR); Mondet, Jean, 13330 Pelissanne (FR)
(74) Mandataire: GPI & Associés

(56) Documents cités:
- EP-A- 0 469 263
- EP-A1- 0 491 227
- WO-A-89/04081
- WO-A1-98/37614
- WO-A1-99/36286
- DE-A1- 4 141 525
- DE-A1- 10 010 962
- FR-A- 1 254 455

## Description

La présente invention concerne un moteur électromécanique à double sortie, ces dernières déclenchant, l'une après l'autre, deux cinématiques différentes.

De plus, ce moteur est avantageusement mis en oeuvre dans un dispositif automatique de repliage/déploiement d'une pale d'un rotor principal de sustentation, voire même de propulsion, d'un giravion. Une fois les pales repliées le long du fuselage du giravion, l'encombrement de ce dernier est particulièrement réduit ce qui facilite son logement dans un hangar ou un navire.

Lorsqu'un giravion est en configuration de vol, les pales sont liées au moyeu du rotor principal par des moyens de fixation qui les verrouillent dans une position déployée.

Pour replier une pale, il est alors nécessaire de la déverrouiller pour lui permettre un mouvement de grande amplitude, généralement vers l'arrière.

Pour déployer une pale, il suffit d'inverser l'ordre de la séquence précitée. On ramène la pale en configuration de vol par un mouvement de grande amplitude, généralement vers l'avant, puis on la verrouille en position déployée.

On connaît un premier dispositif de repliage/déploiement d'une pale utilisant deux moteurs à sortie unique pour respectivement remplir les fonctions verrouillage et repliage via une première et une deuxième chaînes de transmission du mouvement. Chaque moteur à sortie unique comporte un carénage extérieur entourant un stator fixe, pourvu d'une bobine, à l'intérieur duquel se trouve un rotor. En étant alimenté électriquement, le stator crée un champ magnétique qui entraîne en rotation le rotor, ce dernier pouvant alors activer la chaîne de transmission du mouvement à laquelle il est connecté.

Cette solution est efficace mais encombrante et difficile à mettre en oeuvre.

On connaît un deuxième dispositif de repliage/déploiement d'une pale, dénommé « interlock » en langue anglaise par l'homme du métier, utilisant un seul moteur à sortie unique qui commande les cinématiques de verrouillage/déverrouillage et de repliage/déploiement. En fonction de la position des moyens de fixation, par l'intermédiaire d'un logique « mécanique » liée aux chaînes de transmission du mouvement, la cinématique de verrouillage/déverrouillage ou de repliage/déploiement est activée. Bien que séduisant, ce deuxième dispositif est très difficile à mettre au point et sa masse est élevée compte tenu du nombre important de pièces mécaniques.

Comme nous l'avons vu, les dispositifs connus nécessitant l'activation de deux chaînes de transmission du mouvement différentes, pour le repliage/déploiement des pales du rotor principal d'un giravion par exemple, utilisent un ou deux moteurs à sortie unique. Dans ces conditions, afin de s'affranchir des limitations mentionnées ci-dessus liées à ces dispositifs connus, il convient d'utiliser un nouveau genre de moteur, dénommé dans la suite du texte moteur à double sortie, pour actionner les deux chaînes de transmission du mouvement.

Par ailleurs, on note que le document WO 89/04081 décrit un actionneur pourvu d'un carénage extérieur entourant un stator à l'intérieur duquel est agencé un rotor. Cet actionneur comporte un arbre d'entrée et un arbre de sortie. Dès lors, l'actionneur possède une unique sortie.

Le document DE 10010962 décrit un actionneur constitué de deux moteurs pas à pas montés "en série".

Le document EP 0469263 est relatif à une génératrice à stator tournant.

Le document FR 1254455 est quant à lui relatif à un système motorisé de verrouillage et de repliage d'une pale d'un rotor de giravion qui comporte des biellettes et un amortisseur reliant une partie fixe de la pale à une partie repliable de cette pale.

Le document WO 98/37614 décrit un véhicule électrique muni d'un moteur électrique. Ce moteur électrique comprend un rotor externe et un rotor interne reliés respectivement à deux trains de roulement. Un premier système de freinage freine la rotation du rotor externe. Un deuxième système de freinage freine la rotation du rotor interne.

Le document WO 99/36286 décrit un moteur muni d'un rotor et d'un stator entraînant deux arbres respectivement via notamment deux portes-satellites.

Selon une réalisation, chaque porte-satellites comprend une face tronconique coopérant avec un disque de freinage.

Selon une autre réalisation, un anneau actionné via un câble freine le rotor et le stator.

La présente invention a ainsi pour objet de proposer un moteur électromécanique à double sortie permettant de déclencher, l'une après l'autre, deux cinématiques différentes selon la revendication 1. Selon l'invention, un moteur électromécanique est muni d'un actionneur pourvu d'un carénage extérieur qui entoure un stator possédant une bobine. Un rotor est de plus agencé à l'intérieur du stator. L'invention est remarquable en ce que l'actionneur comporte deux sorties, distinctes et indépendantes, capables respectivement d'actionner, l'une après l'autre, une première ou une deuxième chaîne de transmission du mouvement.

Pour actionner la deuxième chaîne de transmission du mouvement, le stator est alors libre d'effectuer un mouvement rotatif autour d'un axe lorsque le rotor est freiné.

De la même manière, pour actionner la première chaîne de transmission du mouvement, le rotor est libre d'effectuer un mouvement rotatif autour dudit axe lorsque le stator est à son tour freiné.

Pour ce faire, en étant alimenté électriquement par un moyen de traitement, éventuellement intégré dans le moteur en étant agencé contre le carénage extérieur de l'actionneur, le stator crée un champ magnétique à l'aide de sa bobine. Lorsque ce stator est maintenu dans une position fixe, le rotor entame alors un mouvement rotatif sous l'action de ce champ magnétique. A contrario et par réaction, en maintenant le rotor dans une position fixe, c'est le stator qui se trouve entraîné en rotation.

Ainsi, ce moteur électromécanique possédant deux sorties distinctes est à même d'actionner, l'une après l'autre, deux chaînes de transmission du mouvement distinctes, la première chaîne étant pilotée par le rotor lorsque celui-ci tourne et la deuxième chaîne par le stator.

De façon avantageuse, le rotor est pourvu d'un premier disque. Ce premier disque est plaqué contre un moyen principal de freinage par un premier moyen secondaire de freinage, ce qui interdit alors tout mouvement rotatif au rotor.

De même, un deuxième disque agencé sur le stator est maintenu contre le moyen principal de freinage par un deuxième moyen secondaire de freinage, ce qui interdit tout mouvement rotatif au stator.

Le rotor et le stator étant freinés par les moyens de freinage principal et secondaire, le moteur électromagnétique selon l'invention comporte des moyens de déconnexion afin de laisser la possibilité au rotor ou au stator d'entamer un mouvement rotatif.

Par suite, un premier moyen de déconnexion, au moins un électroaimant par exemple, permet de désolidariser le premier moyen secondaire de freinage du premier disque lorsqu'il est alimenté électriquement par le moyen de traitement. Le deuxième disque étant toujours enserré entre le moyen principal de freinage et le deuxième moyen secondaire de freinage, le stator est fixe et le rotor peut alors être mis en rotation sous l'effet du champ magnétique créé par le stator.

De même, un deuxième moyen de déconnexion, au moins un électroaimant par exemple, permet de désolidariser le deuxième moyen secondaire de freinage du deuxième disque lorsqu'il est alimenté électriquement par le moyen de traitement.

Enfin, pour que le moyen de traitement puisse alimenter électriquement le stator dans toutes les configurations, c'est-à-dire stator tournant ou non, au moins une bague collectrice est disposée entre le carénage extérieur et le stator.

De plus, la présente invention a aussi pour objet un dispositif automatique de repliage/déploiement d'une pale utilisant le moteur électromécanique à double sortie précédemment décrit pour optimiser l'encombrement, l'agencement, la mise au point et la masse du dispositif.

Bien qu'étant extrêmement utile dans un dispositif automatique de repliage/déploiement de pales, le moteur à double à sortie pourrait évidemment être agencé dans n'importe quel système nécessitant l'actionnement de deux cinématiques différentes, un train d'atterrissage repliable par exemple.

Selon l'invention, un dispositif automatique de repliage/déploiement d'une pale du rotor principal d'un giravion est muni d'au moins un moyen de verrouillage et d'au moins un moyen de repliage commandés respectivement par une première et une deuxième chaînes de transmission du mouvement.

Ce dispositif est remarquable puisque les première et deuxième chaînes de transmission du mouvement sont actionnées, indépendamment et l'une après l'autre, par un seul moteur électromécanique à double sortie selon l'invention.

Utiliser un unique moteur et deux chaînes de transmission du mouvement peu complexes permet d'obtenir un dispositif peu encombrant, fiable et facile à mettre au point.

En outre, les deux chaînes de transmission du mouvement étant indépendantes l'une de l'autre, un problème mécanique affectant le fonctionnement de l'une des chaînes ne remettra pas en cause le bon fonctionnement de l'autre. Ainsi, les actions de maintenance sont fortement facilitées.

De plus, le dispositif selon l'invention comporte avantageusement un premier et un deuxième moyen de contrôle pour respectivement indiquer au moyen de traitement du moteur les positions des moyens de verrouillage et de repliage. En fonction des informations transmises par ces premier et deuxième moyens de contrôle, le moyen de traitement indiquera éventuellement au moteur électromécanique d'actionner la première ou la deuxième chaîne de transmission du mouvement.

Un opérateur, le pilote du giravion par exemple, peut en outre commander le repliage/déploiement à l'aide d'un moyen de commande qui transmettra l'ordre de repliage ou de déploiement au moyen de traitement.

Enfin, au cas où un problème apparaîtrait durant l'opération repliage/déploiement, au moins un limiteur de couple est agencé sur chacune des chaînes de transmission du mouvement.

L'invention et ses avantages apparaîtront avec plus de détails dans le cadre de la description suivante, qui illustre un exemple de réalisation, donné sans aucun caractère limitatif, en référence aux figures annexées qui représentent :
- la figure 1, une vue de dessus d'un giravion,
- la figure 2, une vue d'un moyen de verrouillage d'une pale,
- la figure 3, un dispositif de repliage/déploiement de pales selon l'invention, et
- la figure 4, une coupe d'un moteur électromécanique à double sortie selon l'invention.

Les éléments présents dans plusieurs figures distinctes sont affectés d'une seule et même référence.

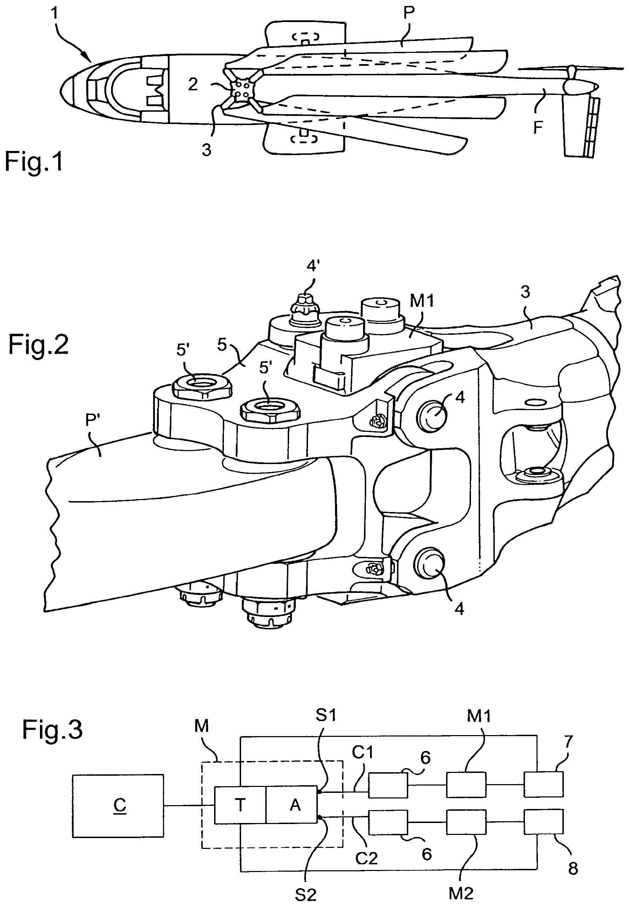

La figure 1 présente une vue de dessus d'un giravion 1. II comporte quatre pales P, chaque pale P étant reliée au moyeu 2 du rotor principal du giravion par un bras 3.

Afin de pouvoir loger le giravion 1 dans un hangar de faibles dimensions, voire même dans un navire, les pales P sont repliées vers l'arrière de manière à être disposées le long de la poutre de queue F.

La figure 2 présente un moyen de verrouillage d'une pale P. Le pied P' de la pale P est attaché à une ferrure 5 par un moyen de fixation usuel, des boulons 5' par exemple.

En outre, cette ferrure 5 est fixée au bras 3 par des axes 4' et un moyen de verrouillage M1 pourvu de deux verrous rétractables 4.

En déverrouillant la paire de verrous 4, on libère la pale P, ce qui permet au moyen de repliage M2, non représenté sur la figure 2, de positionner la pale P, en la faisant pivoter autour des axes 4', le long de la poutre de queue F .

La figure 3 présente un dispositif automatique de repliage/déploiement d'une pale du rotor principal d'un giravion conforme à l'invention.

Ce dispositif comporte un moyen de commande C pour verrouiller/déverrouiller une pale de giravion, un moteur électromécanique M pourvu d'un moyen de traitement T et d'un actionneur A à double sortie S1, S2, une première C1 et une deuxième C2 chaîne de transmission du mouvement, un moyen de verrouillage M1, un moyen de repliage M2 ainsi qu'un premier 7 et un deuxième 8 moyen de contrôle.

L'actionneur A du moteur électromécanique M est alimenté électriquement par un courant triphasé via le moyen de traitement T. Il fonctionne comme un moteur électrique de type asynchrone. De plus, les deux sorties S1, S2 de cet actionneur A peuvent tourner dans le sens senestrorsum ou dextrorsum, le sens de rotation dépendant de la façon dont les phases sont alimentées électriquement. Il est dans ces conditions évident que le sens de rotation des sorties S1, S2 sera différent suivant que l'on effectue le repliage ou le déploiement d'une pale. Ainsi, si l'actionneur A est alimenté électriquement de façon à ce que les sorties S1, S2 tournent dans le sens senestrorsum au cours de l'opération de repliage, il sera électriquement alimenté de façon à ce que les sorties S1, S2 tournent dans le sens dextrorsum au cours de l'opération de déploiement.

Pour replier une pale au sol ou sur toute autre hélisurface, c'est-à-dire la faire passer d'une configuration de vol à une configuration de parking, un opérateur utilise le moyen de commande C afin d'entamer la séquence de repliage, constitué d'un premier cycle de déverrouillage et d'un deuxième cycle de repliage.

Au début du cycle de déverrouillage, le moyen de traitement T alimente électriquement l'actionneur A de manière à piloter le moyen de verrouillage M1 par l'intermédiaire de la première chaîne de transmission du mouvement C1 connectée à la première sortie S1 de l'actionneur A.

Le moyen de verrouillage M1 permet aux verrous 4 de se dégager de l'ensemble bras 3-pale P, ce qui libère la pale P et lui autorise un mouvement vers l'arrière.

Par suite, le premier moyen de contrôle 7, un micro-switch de fin de course par exemple, indique au moyen de traitement T que la pale est déverrouillée ce qui met fin au premier cycle.

Le repliage de la pale P peut alors débuter. Le moyen de traitement T alimente électriquement l'actionneur A de manière à désormais piloter le moyen de repliage M2 par l'intermédiaire de la deuxième chaîne de transmission du mouvement C2 connectée à la deuxième sortie S2 de l'actionneur A.

Le moyen de repliage M2 agit alors sur la pale P pour la ranger le long de la poutre de queue F du giravion. Une fois la pale P en place, le deuxième moyen de contrôle 8, un micro-switch de fin de course par exemple, transmet un signal au moyen de traitement T pour lui indiquer que la pale est correctement positionnée. L'actionneur A n'est alors plus alimenté électriquement et l'opération est terminée.

Le déploiement d'une pale P est effectué selon le même principe. Néanmoins, comme on l'a vu précédemment, le sens de rotation des sorties S1, S2 de l'actionneur A est contraire à celui utilisé lors de l'opération de repliage.

En effet, le moyen de traitement T alimente électriquement l'actionneur A de manière à actionner le moyen de repliage M2 par l'intermédiaire de la deuxième chaîne de transmission du mouvement C2 connectée à la deuxième sortie S2 de l'actionneur A.

Ce moyen de repliage M2 agit alors sur la pale P pour la ramener en configuration de vol. Une fois la pale P en position, le deuxième moyen de contrôle 8 transmet un signal au moyen de traitement T pour lui indiquer que la pale P est correctement positionnée.

Ensuite, le moyen de traitement T alimente électriquement l'actionneur A de manière à piloter le moyen de verrouillage M1 par l'intermédiaire de la première chaîne de transmission du mouvement C1 connectée à la première sortie S1 de l'actionneur A.

Ce moyen de verrouillage M1 permet aux verrous 4 de fixer solidairement la pale P sur le bras 3.

Le premier moyen de contrôle 7 indique alors au moyen de traitement 6 que la pale est verrouillée.

Enfin, chacune des chaînes de transmission du mouvement comporte avantageusement un limiteur de couple 6 qui a pour fonction d'éviter de briser les chaînes de transmission du mouvement C1, C2 si un élément extérieur au dispositif vient perturber les opérations de repliage/déploiement.

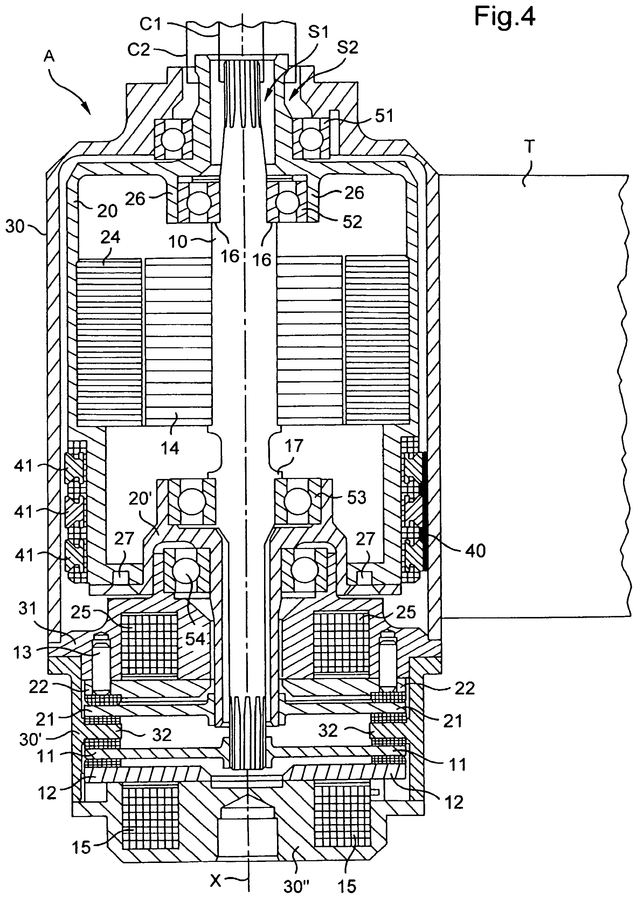

La figure 4 présente un moteur électromécanique M selon l'invention muni d'un actionneur A à double sortie S1, S2 et d'un moyen de traitement T.

L'actionneur A comporte un stator, comprenant une partie inférieure 20' et une partie supérieure 20 pourvue d'une première bobine 24, un rotor 10 pourvu d'une deuxième bobine 14 du type « cage à écureuil », et un carénage extérieur muni d'une partie principale 30, d'une partie intermédiaire 30' et d'un couvercle 30". De plus, le rotor 10 et le stator ont une symétrie de révolution autour de l'axe X.

La partie supérieure 20 du stator est agencée dans la partie principale 30 du carénage extérieur, un premier roulement à billes 51 étant placé entre ces deux parties 20, 30. De même, le rotor 10 est inséré à l'intérieur du stator, un deuxième roulement à billes 52 étant disposé entre un premier 16 et un deuxième 26 épaulements relatifs respectivement au rotor 10 et à la partie supérieure 20 du stator.

Un troisième roulement à billes 53 vient en butée, par sa bague intérieure, contre une saillie 17 du rotor 10. II est de plus en contact par sa bague extérieure avec la partie inférieure 20' du stator, cette dernière étant alors fixée à la partie supérieure 20 par un moyen usuel, des vis 27 par exemple.

Le rotor 10, ainsi calé par les deuxième 52 et troisième 53 roulements à billes ainsi que par le stator ne peut donc effectuer que des mouvements rotatifs autour de l'axe X.

De même, le stator est calé par un quatrième roulement à billes 54 agencé contre sa partie inférieur 20' et une entretoise 31, cette dernière étant elle-même solidaire du carénage extérieur en étant enserrée par un moyen de fixation usuel non représenté entre sa partie principale 30 et sa partie intermédiaire 30'. Ainsi, le stator ne peut lui aussi effectuer que des mouvements rotatifs autour de l'axe X.

Lorsque le rotor 10 tourne autour de cet axe X, la première sortie S1 de l'actionneur A permet de piloter une première chaîne de transmission du mouvement C1. De même, lorsque le stator tourne, la deuxième sortie S2 de l'actionneur A pilote une deuxième chaîne de transmission du mouvement C2.

Les chaînes de transmission du mouvement C1, C2 sont, sur la figure 4, disposées selon l'axe X. Cependant, il est évident que les sorties S1, S2 sont adaptables pour autoriser une connexion des chaînes C1, C2 selon un axe présentant un angle avec l'axe X et pouvant donc lui être perpendiculaire par exemple.

Par ailleurs, le moyen de traitement T alimente électriquement le stator par un courant triphasé via des bague collectrices 41 en contact avec des balais 40, en graphite par exemple, agencés sur la partie supérieure 30 du carénage extérieur. Le courant électrique passe alors dans la première bobine 24 qui crée un champ magnétique à l'intérieur de l'actionneur A.

Si le stator est freiné, par des moyens décrits ci-dessous, ce champ magnétique entraîne en rotation le rotor 10 pour piloter la première chaîne de transmission du mouvement C1. A l'inverse, si c'est le rotor 10 qui est freiné, le stator devra entamer un mouvement rotatif.

Le système de freinage est disposé dans la zone basse de l'actionneur A, c'est-à-dire à l'intérieur de la partie intermédiaire 30' et du couvercle 30".

En outre, le rotor 10 et le stator sont respectivement munis d'un premier 11 et d'un deuxième 21 disques. En enserrant l'un ou l'autre de ces disques 11,21 entre un moyen principal 32 et un moyen secondaire 12, 22 de freinage, on interdit tout mouvement rotatif au rotor ou au stator, selon le cas.

Pour ce faire, les éléments suivants sont agencés, les uns en dessous des autres:
- l'entretoise 31,
- le deuxième moyen secondaire 22 de freinage,
- le deuxième disque 21,
- le moyen principal de freinage 32 solidaire du carénage extérieur puisque composé d'un épaulement de la partie intermédiaire 30',
- le premier disque 11,
- un premier moyen secondaire de freinage 12, et
- le couvercle 30".

En outre, les premier 12 et deuxième 22 moyens secondaires de freinage sont solidaires en rotation du carénage extérieur en étant respectivement reliés à l'entretoise 31 et au couvercle 30" par des moyens usuels. Le carénage extérieur étant fixe, les premier 12 et deuxième 22 moyens secondaires ne peuvent donc pas effectuer des mouvements rotatifs. En revanche, des moyens usuels, des pions 13 par exemple pour le deuxième moyen secondaire, autorisent néanmoins aux premier 12 et deuxième 22 moyens secondaires un faible déplacement selon l'axe X.

De plus, des ressorts, non représentés sur la figure 4, sont insérés dans l'entretoise 31 et le couvercle 30". Ainsi, lorsque l'actionneur A n'est pas alimenté électriquement, ces ressorts poussent les premier 12 et deuxième 22 moyens secondaires respectivement contre les premier 11 et deuxième 21 disques. Ces derniers sont alors coincés entre le moyen principal 32 et les moyens secondaires 12, 22 de freinage. En l'état, le rotor 10 et le stator ne peuvent de ce fait pas se mouvoir en rotation autour de l'axe X.

Pour que le moteur M puisse remplir sa fonction, c'est-à-dire piloter, l'une après l'autre, une première C1 et une deuxième C2 chaînes de transmission du mouvement, l'actionneur A comporte un premier 15 et un deuxième 25 moyens de déconnexions qui sont commandés par le moyen de traitement T suivant le besoin.

Ces premier 15 et deuxième 25 moyens de déconnexions comportent des électroaimants respectivement agencés dans le couvercle 30" et l'entretoise 31.

Le principe de fonctionnement du moteur M à double sortie S1, S2, employé par exemple dans le dispositif explicité précédemment pour replier une pale, est alors le suivant.

Au début de l'opération, l'actionneur A n'est pas alimenté électriquement, le rotor et le stator sont donc bloqués par le système de freinage.

Le moyen de traitement T alimente alors électriquement, par un courant continu par exemple, le premier moyen de déconnexion 15. Ce dernier se comportant par suite comme un aimant, le premier moyen secondaire 12 de freinage est attiré par le premier moyen de déconnexion 15, ce qui a pour effet de libérer de toutes contraintes le premier disque 11.

Le moyen de traitement T alimente ensuite, électriquement via les bagues collectrices 41 et les balais 40 en graphite, la première bobine 24 du stator qui crée un champ magnétique. Le disque 11 étant libéré, le rotor, mis en rotation sous l'effet du champ magnétique, actionne la première chaîne de transmission du mouvement C1 pour déverrouiller la pale. Une fois les verrous 4 rétractés, le moyen de contrôle 7 indique au moyen de traitement T que l'opération de déverrouillage est terminée.

Une fois ce premier cycle mené à son terme, le moyen de traitement T n'alimente plus électriquement l'actionneur A et plus particulièrement le premier moyen de déconnexion 15. Sous l'effet des ressorts, le premier moyen secondaire de freinage 12 retrouve sa position d'origine, le rotor est donc à nouveau freiné.

Néanmoins, le moyen de traitement T alimente désormais électriquement, par un courant continu par exemple, le deuxième moyen de déconnexion 25. Le deuxième moyen secondaire 22 de freinage se rapproche par suite du deuxième moyen de déconnexion 25 ce qui libère le deuxième disque 21.

Comme lors du premier cycle, le moyen de traitement T alimente de plus la première bobine 24 du stator qui crée un champ magnétique. Le deuxième disque 21 n'étant plus freiné, le stator est mis en rotation ce qui permet à la deuxième chaîne de transmission du mouvement C2 de replier la pale P.

Naturellement, la présente invention est sujette à de nombreuses variations quant à sa mise en oeuvre. Bien qu'un mode de réalisation ait été décrit, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Moteur (M) électromécanique muni d'un actionneur (A) pourvu d'un carénage extérieur (30-30'-30") entourant un stator (20-20'), à l'intérieur duquel est agencé un rotor (10), ledit actionneur (A) comportant deux sorties (S1, S2) distinctes et indépendantes qui sont pilotées respectivement par le rotor (10) et le stator (20-20'), le rotor (10) et le stator (20-20') ayant une symétrie de révolution autour d'un axe (X), le moteur (M) électromécanique comportant un premier disque (11) de freinage, un deuxième disque (21) de freinage, une première (C1) et une deuxième (C2) chaînes de transmission du mouvement
**caractérisé en ce que** lesdits deux sorties étant destinées à actionner l'une après l'autre la première (C1) et la deuxième (C2) chaînes de transmission du mouvement, ledit stator (20-20') étant libre d'effectuer un mouvement rotatif autour d'un axe (X) lorsque ledit rotor (10) est freiné pour activer ladite deuxième chaîne de transmission (C2) du mouvement, ledit rotor (10) étant libre d'effectuer un mouvement rotatif autour dudit axe (X) lorsque ledit stator (20-20') est freiné pour activer ladite première chaîne de transmission (C1) du mouvement, dans ledit rotor (10) le premier disque (11) étant enserré entre un premier moyen secondaire de freinage (12) et un moyen principal de freinage (32), dans ledit stator (20-20') le deuxième disque (21) étant enserré entre un deuxième moyen secondaire de freinage (22) et ledit moyen principal de freinage (32), le premier moyen secondaire de freinage (12) étant mobile pour coincer ledit premier disque (11) contre le moyen principal de freinage (32) pour freiner le rotor, le deuxième moyen secondaire de freinage (22) étant mobile pour coincer ledit deuxième disque (21) contre le moyen principal de freinage (32) pour freiner le stator (20-20'), le moyen principal de freinage étant composé d'un épaulement (32) d'une partie intermédiaire (30') dudit carénage extérieur (30-30'-30"), le moteur (M) électromécanique étant agencé suivant l'axe (X) de symétrie de révolution avec les uns en dessous des autres:
- les deux sorties (S1, S2) distinctes et indépendantes,
- le deuxième moyen secondaire (22) de freinage,
- le deuxième disque (21),
- le moyen principal de freinage (32),
- le premier disque (11), et
- un premier moyen secondaire de freinage (12).

2. Moteur électromécanique selon la revendication 1,
**caractérisé en ce que** ledit actionneur (A) comporte un premier moyen de déconnexion (15) qui, en étant alimenté électriquement, désolidarise ledit premier moyen secondaire de freinage (12) dudit premier disque (11).

3. Moteur électromécanique selon l'une quelconque des revendications précédentes,
**caractérisé en ce que** ledit actionneur (A) comporte un deuxième moyen de déconnexion (25) qui, en étant alimenté électriquement, désolidarise ledit deuxième moyen secondaire de freinage (22) dudit deuxième disque (21).

4. Moteur électromécanique selon la revendication 2,
**caractérisé en ce que** ledit premier moyen de déconnexion (15) comporte au moins un électroaimant.

5. Moteur électromécanique selon la revendication 3,
**caractérisé en ce que** ledit deuxième moyen de déconnexion (25) comporte au moins un électroaimant.

6. Moteur électromécanique selon l'une quelconque des revendications précédentes,
**caractérisé en ce que** ledit stator (20-20') est alimenté électriquement via au moins une bague collectrice (41) agencée entre ledit carénage extérieur (30) et ledit stator (20-20').

7. Moteur électromécanique selon l'une quelconque des revendications précédentes,
**caractérisé en ce que** ledit actionneur (A) est alimenté électriquement par un moyen de traitement (T).

8. Moteur électromécanique selon la revendication 7,
**caractérisé en ce que** ledit moyen de traitement (T) est intégré dans ledit moteur (M) en étant agencé contre le carénage extérieur (30) dudit actionneur (A).

9. Dispositif automatique de repliage/déploiement d'une pale (P) du rotor principal d'un giravion (1) muni d'au moins un moyen de verrouillage (M1) et d'au moins un moyen de repliage (M2) commandés respectivement par une première (C1) et une deuxième (C2) chaînes de transmission du mouvement,
**caractérisé en ce que** lesdites première (C1) et deuxième (C2) chaînes de transmission du mouvement sont actionnées , indépendamment et l'une après l'autre, par ledit moteur (M) électromécanique selon l'une quelconque des revendications 1 à 8.

10. Dispositif selon la revendication 9,
**caractérisé en ce que**, ledit moteur (M) étant pourvu d'un moyen de traitement (T), il comporte un premier moyen de contrôle (7) pour indiquer audit moyen de traitement (T) la position dudit moyen de verrouillage (M1).

11. Dispositif selon la revendication 9,
**caractérisé en ce qu'**il comporte un deuxième moyen de contrôle (8) pour indiquer audit moyen de traitement (T) la position dudit moyen de repliage (M2).

12. Dispositif selon l'une quelconque des revendications 10 à 11,
**caractérisé en ce qu'**il comporte un moyen de commande (C) pour donner un ordre de repliage ou de déploiement audit moyen de traitement (T).

13. Dispositif selon l'une quelconque des revendications 9 à 12,
**caractérisé en ce que** ladite première chaîne de transmission (C1) du mouvement comportent au moins un limiteur de couple (6).

14. Dispositif selon l'une quelconque des revendications 9 à 13,
**caractérisé en ce que** ladite deuxième chaîne de transmission (C2) du mouvement comportent au moins un limiteur de couple (6).

## Patentansprüche

1. Elektromechanischer Motor (M) mit einem Stellglied (A), dass mit einer Außenverkleidung (30-30'-30") versehen ist, welche einen Stator (20-20') umgibt, in dessen Inneren ein Rotor (10) angeordnet ist, wobei das Stellglied (A) zwei verschiedene und unabhängige Ausgänge (S1, S2) aufweist, die jeweils von dem Rotor (10) und dem Stator (20-20') gesteuert werden, wobei der Rotor (10) und der Stator (20-20') rotationssymmetrisch um eine Achse (X) sind, wobei der elektromechanische Motor (M) eine erste Bremsscheibe (L) eine zweite Bremsscheibe (21), eine erste (C1) und eine zweite (C2) Bewegungsübertragungskette aufweist, **dadurch gekennzeichnet, dass** die beiden Ausgänge dazu bestimmt sind nacheinander die erste (C1) und die zweite (C2) Bewegungsübertragungskette in Bewegung zu setzen, wobei der Stator (20-20') frei ist eine Drehbewegung um eine Achse (X) auszuführen wenn der Rotor (10) gebremst ist, um die zweite Bewegungsübertragungskette (C2) zu aktivieren, wobei der Rotor (10) frei ist eine Drehbewegung um die Achse (X) auszuführen wenn der Stator (20-20') gebremst ist um die erste Bewegungsübertragungskette (C1) zu aktivieren, wobei in dem Rotor (10) die erste Scheibe (11) eingeklemmt ist zwischen einem ersten sekundären Bremsmittel (12) und einem Hauptbremsmittel (32), wobei in dem Stator (20-20') die zweite Scheibe (21) eingeklemmt ist zwischen einem zweiten sekundären Bremsmittel (22) und dem Hauptbremsmittel (32), wobei das erste sekundäre Bremsmittel (12) beweglich ist, um die erste Scheibe (11) gegen das Hauptbremsmittel (32) zu quetschen um den Rotor zu bremsen, wobei das zweite sekundäre Bremsmittel (22) beweglich ist, um die zweite Scheibe (21) gegen das Hauptbremsmittel (32) zu quetschen, um den Stator (20-20') zu bremsen, wobei das Hauptbremsmittel aus einer Schulter (32) eines Zwischenbereichs (30') der Außenverkleidung (30-30'-30") besteht, wobei der elektromechanische Motor (M) entlang der Rotationssymmetrieachse (X) angeordnet ist, mit untereinander angeordnet:
- den beiden verschiedenen und unabhängigen Ausgängen (S1, S2,)
- den beiden sekundären Bremsmitteln (22),
- der zweiten Scheibe (21),
- dem Hauptbremsmittel (32),
- der ersten Scheibe (11), und
- einem ersten sekundären Bremsmittel (12).

2. Elektromechanischer Motor nach Anspruch 1, **dadurch gekennzeichnet, dass** das Stellglied (A) ein erstes Entriegelungsmittel (15) aufweist, dass, wenn es mit Strom gespeist wird, das erste sekundäre Bremsmittel (12) von der ersten Scheibe (11) trennt.

3. Elektromechanischer Motor nach einem der vorstehenden Ansprüche, **dadurch gekennzeichnet, dass** das Stellglied (A) ein zweites Entriegelungsmittel (25) aufweist, dass, wenn es mit Strom gespeist wird, das zweite sekundäre Bremsmittel (22) von der zweiten Scheibe (21) trennt.

4. Elektromechanischer Motor nach Anspruch 2, **dadurch gekennzeichnet, dass** das erste Entriegelungsmittel (15) mindestens einen Elektromagneten aufweist.

5. Elektromechanischer Motor nach Anspruch 3, **dadurch gekennzeichnet, dass** das zweite Entriegelungsmittel (25) mindestens einen Elektromagneten aufweist.

6. Elektromechanischer Motor nach einem der vorstehenden Ansprüche, **dadurch gekennzeichnet, dass** der Stator (20-20') elektrisch über mindestens einen Schleifring (41) gespeist wird, der zwischen der äußeren Verkleidung (30) und dem Stator (20-20') angeordnet ist.

7. Elektromechanischer Motor nach einem der vorstehenden Ansprüche, **dadurch gekennzeichnet, dass** das Stellglied (A) elektrisch durch ein Verarbeitungsmittel (T) gespeist wird.

8. Elektromechanischer Motor nach Anspruch 7, **dadurch gekennzeichnet, dass** das Verarbeitungsmittel (T) in dem Motor (M) integriert ist indem es an der äußeren Verkleidung (30) des Stellglieds (A) angeordnet ist.

9. Automatische Vorrichtung zum Zusammenlegen/Entfalten eines Rotorblatts (P) des Hauptrotors eines Drehflügelflugzeugs (1), welche mit mindestens einem Verriegelungsmittel (M1) und mindestens einem Zusammenlegungsmittel (M2) versehen ist, die jeweils durch eine erste (C1) und eine zweite (C2) Bewegungsübertragungskette gesteuert werden, **dadurch gekennzeichnet, dass** die erste (C1) und die zweite (C2) Bewegungsübertragungskette unabhängig und nacheinander von dem elektromechanischen Motor (M) gemäß einem der Ansprüche 1 bis 8 in Bewegung gesetzt werden.

10. Vorrichtung nach Anspruch 9, **dadurch gekennzeichnet, dass** der Motor (M) mit einem Verarbeitungsmittel (T) versehen ist, welches ein erstes Steuermittel (7) aufweist, um dem Verarbeitungsmittel (T) die Positionen des Verriegelungsmittels (M1) anzuzeigen.

11. Vorrichtung nach Anspruch 9, **dadurch gekennzeichnet, dass** sie ein zweites Steuermittel (8) aufweist um dem Verarbeitungsmittel (T) die Positionen des Zusammenlegungsmittels (M2) anzuzeigen.

12. Vorrichtung nach einem der Ansprüche 10 bis 11, **dadurch gekennzeichnet, dass** es ein Steuermittel (C) aufweist um dem Verarbeitungsmittel (T) einen Zusammenlegungs- oder Entfaltungsbefehl zu geben.

13. Vorrichtung nach einem der Ansprüche 9 bis 12, **dadurch gekennzeichnet, dass** die erste Bewegungsübertragungskette (C1) mindestens einen Drehmomentbegrenzer (6) aufweist.

14. Vorrichtung nach einem der Ansprüche 9 bis 13, **dadurch gekennzeichnet, dass** die zweite Bewegungsübertragungskette (C2) mindestens einen Drehmomentbegrenzer (6) aufweist.

## Claims

1. Electromechanical motor (M) equipped with an actuator (A) having an outer casing (30-30'-30") surrounding a stator (20-20'), inside which a rotor (10) is arranged, said actuator (A) comprising two distinct and independent outlets (S1, S2) which are controlled respectively by the rotor (10) and the stator (20-20'), the rotor (10) and the stator (20-20') having a symmetry of revolution about an axis (X), the electromechanical motor (M) comprising a first brake disc (11), a second brake disc (21), a first motion transmission chain (C1) and a second motion transmission chain (C2),
**characterized in that** said two outlets are designed to actuate one after the other the first (C1) and the second (C2) motion transmission chains, said stator (20-20') is free to perform a rotational movement about an axis (X) when said rotor (10) is braked so as to activate said second motion transmission chain (C2), said rotor (10) is free to perform a rotational movement about said axis (X) when said stator (20-20') is braked so as to activate said first motion transmission chain (C1), the first disk (11) in said rotor (10) is clamped between a first secondary braking means (12) and a main braking means (32), the second disk (21) in said stator (20-20') is clamped between a second secondary braking means (22) and said main braking means (32), the first secondary braking means (12) is movable so as to jam said first disk (11) against the main braking means (32) in order to brake the rotor, the second secondary braking means (22) is movable so as to jam said second disk (21) against the main braking means (32) in order to brake the stator (20-20'), the main braking means is composed of a shoulder (32) of an intermediate part (30') of said outer casing (30-30'-30"), and the electromechanical motor (M) is arranged with the following one below the other along the axis (X) of symmetry of revolution:
- the two distinct and independent outlets (S1, S2),
- the second secondary braking means (22),
- the second disk (21),
- the main braking means (32),
- the first disk (11), and
- a first secondary braking means (12).

2. Electromechanical motor according to claim 1, **characterized in that** said actuator (A) comprises a first disconnection means (15) which, on being powered electrically, separates said first secondary braking means (12) from said first disk (11).

3. Electromechanical motor according to any one of the preceding claims, **characterized in that** said actuator (A) comprises a second disconnection means (25) which, on being powered electrically, separates said second secondary braking means (22) from said second disk (21).

4. Electromechanical motor according to claim 2, **characterized in that** said first disconnection means (15) comprises at least one electromagnet.

5. Electromechanical motor according to claim 3, **characterized in that** said second disconnection means (25) comprises at least one electromagnet.

6. Electromechanical motor according to any one of the preceding claims, **characterized in that** said stator (20-20') is powered electrically via at least one slip ring (41) arranged between said outer casing (30) and said stator (20-20').

7. Electromechanical motor according to any one of the preceding claims, **characterized in that** said actuator (A) is powered electrically by a processing means (T).

8. Electromechanical motor according to claim 7, **characterized in that** said processing means (T) is integrated in said motor (M) and is arranged against the outer casing (30) of said actuator (A).

9. Automatic device for folding/deploying a blade (P) of the main rotor of a rotorcraft (1) equipped with at least one locking means (M1) and with at least one folding means (M2) which are controlled respectively by a first motion transmission chain (C1) and a second motion transmission chain (C2),
**characterized in that** said first (C1) and second (C2) motion transmission chains are actuated, independently and one after the other, by said electromechanical motor (M) according to any one of claims 1 to 8.

10. Device according to claim 9, **characterized in that** said motor (M) is provided with a processing means (T) and comprises a first monitoring means (7) for indicating to said processing means (T) the position of said locking means (M1).

11. Device according to claim 9, **characterized in that** it comprises a second monitoring means (8) for indicating to said processing means (T) the position of said folding means (M2).

12. Device according to any one of claims 10 to 11, **characterized in that** it comprises a control means (C) for issuing a fold or deploy order to said processing means (T).

13. Device according to any one of claims 9 to 12, **characterized in that** said first motion transmission chain (C1) comprises at least one torque limiter (6).

14. Device according to any one of claims 9 to 13, **characterized in that** said second motion transmission chain (C2) comprises at least one torque limiter (6).
